Europäisches Patentamt

European Patent Office

Office européen des brevets

(19)

(11) Publication number: **0 203 498**
**A1**

## (12) EUROPEAN PATENT APPLICATION

(21) Application number: **86106838.5**

(22) Date of filing: **20.05.86**

(51) Int. Cl.⁴: **F16K 35/06 , F16K 37/00**

(30) Priority: **24.05.85 IT 1250385**

(43) Date of publication of application:
**03.12.86 Bulletin 86/49**

(84) Designated Contracting States:
**AT BE CH DE FR GB LI LU NL SE**

(71) Applicant: **Cl.KA.RA. S.p.A.**
**2/2 Via Zago**
**I-40128 Bologna(IT)**

(72) Inventor: **Ciordinic, Jacques**
**Via Frino 3**
**I-40136 Bologna(IT)**

(74) Representative: **Porsia, Bruno et al**
**c/o Succ. Ing. Fischetti & Weber Via Caffaro**
**3/2**
**I-16124 Genova(IT)**

(54) **Detecting device for valves and the like.**

(57) This invention relates to a detection device for valves and the like, having at least one detecting connector (9-9) inserted in at least one conductor - (10,11,27), preferably an optical conductor, and connected to the actuating means (2;102) for said valve so that it must be disconnected purposely to permit the actuation of the valve, or it is disconnected automatically upon the actuation of said valve, thus interrupting the respective conductor which may form a part of a warning and/or detecting circuit, said interruption constituting a signal that can be used, for example, to communicate and/or record the actuation of the valve and, if desired, to activate a television apparatus permitting to see the person actuating the valve.

Fig.10

" Detecting device for valves and the like. "

This invention relates to valves, and more particularly to the cutoff valves arranged in the piping system of distributing and/or dispensing installations of liquid or gaseous fluids.

The invention aims to communicate to a checking station, with the maximum reliability, every actuation of a valve, i.e. every change in the closed or opened condition thereof, whereby to check any permitted actuation of the valve and to detect any unauthorized actuation thereof.

For this purpose, the invention provides at least one detecting connector which is inserted in at least one conductor, preferably an optical conductor, and is connected to the actuating means for said valve so that it must be disconnected purposely to permit the actuation of the valve, or it is disconnected automatically upon the actuation of said valve, thus interrupting the respective conductor.

This conductor may for a part of any warning and/or detecting circuit and its interruption is a signal which may be used for any suitable purpose, e.g. to communicate and/or record the actuation of the valve and, if desired, to activate a television apparatus permitting to see the person who is actuating the valve.

The detecting connector according to the invention may be constructed and associated with the valve actuating means in any suitable manner compatible with the construction of said actuating means. Specifically in the valves which are actuated through a stem and a rotatable actuating member, the valve stem may be only rotatable about its axis, or only slidable axially, or both rotatable and slidable. In all these three cases, the valve stem and the rotatable actuating member therefor are supported by an inverted U-shaped stand secured to the valve body.

In these cases, the invention provides a locking means which is engaged with the valve stem and with a portion of the supporting stand and/or valve body whereby to prevent any movement of the valve stem and which is disengageable from said valve stem when at least one detecting connector according to the invention is disconnected.

When the valve stem is axially slidable, said locking means may comprise a pair of clamping jaws supporting two complementary portions of at least one detecting connector and clamped against said valve stem upon connecting said connector, thus interengaging with said valve stem to prevent it from sliding axially, e.g. by engaging with the threading thereof and with a co-operating portion which is solidary with the valve body, such as a cross member of said supporting stand, and which acts as a stop member preventing the movement of said stem. In order to move the stem axially, and thus to open or to close said valve, said clamping jaws must be opened to disengage them form said stem and eliminate the effect of said stop member. However, the opening of said jaws causes the disconnection of said detecting connector and, therefore, the opening of the respective circuit.

When the valve stem is rotatable about its axis, said locking means may comprise a pair of clamping jaws supporting two complementary portions of at least one detecting connector and clamped by plugging in said connector against a cam which is fixed to the valve stem, said pair of jaws being engaged as well with any portion which is solidary with the valve body, such as at least one of the uprights of said supporting stand, so as to prevent the rotation of the cam and, therefore, of the valve stem. Again, in order to rotate said stem, and thus to open or to close said valve, said clamping jaws must be opened to permit the rotation of said cam. However, the opening of said jaws causes, again, the disconnection of said detecting connector and, therefore, the interruption of the respective optical conductor.

When the valve stem is both rotatable and axially slidable, either the former of the latter of the two detecting devices described above may be used.

These and further characteristics of the invention and the advantages resulting therefrom will be apparent from the following description of some embodiments thereof, shown by way of non-limitating examples in the accompanying drawings, wherein:

Figure 1 is an elevational and partly sectional view of a valve having a valve stem which is movable only axially and comprising a detecting device with clamping jaws according to the invention.

Figure 2 is an enlarged sectional view on the line II-II of figure 1.

Figure 3 is an elevational view, on a more enlarged scale, of the detecting device, as seen in the direction of the arrows III-III of figure 2.

Figure 4 is an elevational and partly sectional view of a valve having a valve stem which is only rotatable and comprising a detecting device with clamping jaws according to the invention.

Figure 5 is an enlarged sectional view of the detecting device on the lines V-V of figure 4.

Figure 6 is a sectional view similar to figure 2 of a modification of the detecting device with clamping jaws.

Figures 7, 8 and 9 are enlarged fragmentary sectional views of some embodiments of the detecting connector inserted in an optical conductor.

Figure 10 is an elevational and partly sectional view of a further embodiment of the detecting device according to the invention, as applied to a valve having a valve stem which is movable only axially.

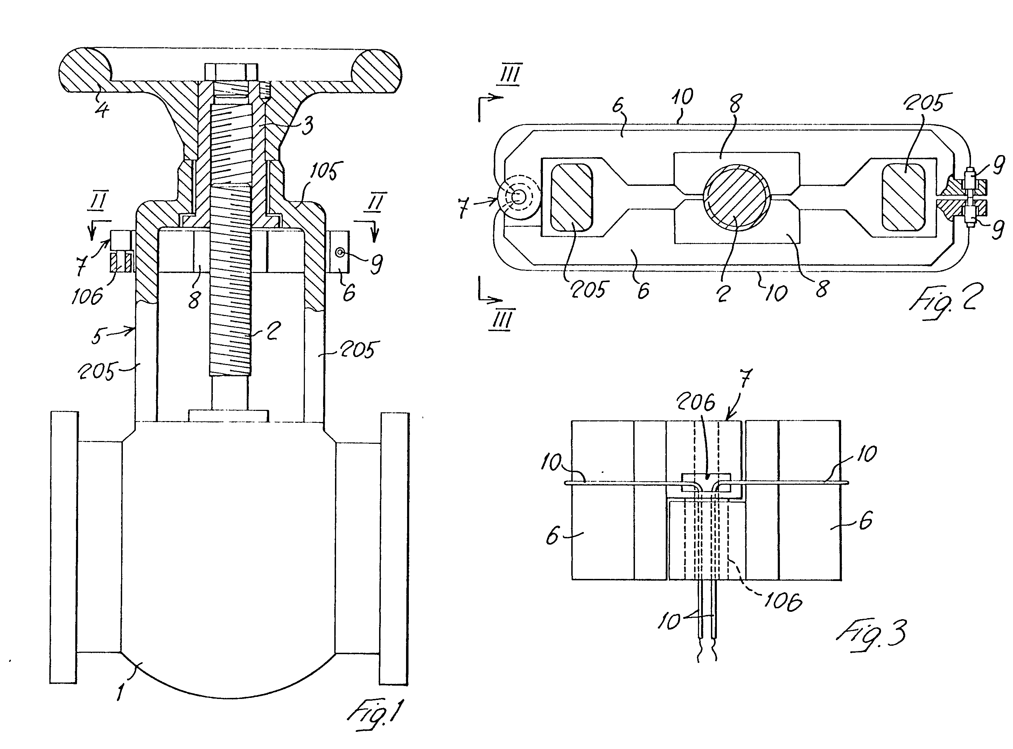

In figure 1, the numeral 1 indicates a valve which is actuated by a threaded stem 2 which is screwed in a corresponding nut-member 3. The nut-member 3 is connected to a control handwheel 4 and rotatably is mounted together therewith in the top cross-member 105 of a supporting stand 5 which is shaped as an inverted U and is fixed through its upright members 205 to the valve body 1. The valves of this type are known. The valve stem 2 thereof has a guided non-rotatable arrangement whereby when said handwheel 4 is rotated together with said nut-member 3, said stem 2 will slide axially to open and to close the valve.

In the exemplary embodiment shown in the figures 1 to 3, the detecting device associated with the valve of figure 1 comprises two locking jaws 6 which are hinged to each other at 7 in a pliers-like fashion and each including in the inner side thereof a half of a nut-member 8 corresponding to the threading of the valve stem 2. The free ends of the two locking jaws 6 are each provided with a portion 9 of a connector for optical fibres. Each portion 9 of said connector is connected to an optical fibre 10. The two optical fibres 10 are led to the exterior and around the locking jaws 6 to the hinge 7 thereof and are co-axially passed together through said hinge. For this purpose, the hinge 7 for the two jaws 6 may be substantially constructed as shown in figure 3 wherein the adjacent ends of said jaws may overlap to each other and a tubular cylindrical extension 106 having a through-bore and stemming from said end of a jaw may be inserted rotatably in a corresponding hole in the end of the other jaw. The two optical fibres 10 may be introduced through a side slot 206 into the bore of said tubular extension 106 and are led out through the opposite end thereof. Obviously, suitable means may be provided to prevent said tubular extension 106 from disengaging from the recess accommodating it in the other jaw. Anyway, the hinge 7 between the two locking jaws 6 may be constructed in any other equivalent manner.

Said detecting device may be applied to the valve 1, for example, to detect the opening of said valve. For this purpose, in the closed position of the valve, i.e. when the stem 2 is in its lowermost position, as shown in figure 1, the two locking jaws 6 are closed against the stem 2 and the two upright members 205 of the supporting stand 5, so as to embrace said upright members 205 and to engage the stem 2 by means of the pair of opposite nut-members 8 thereof, as shown clearly in figure 2. At the same time, the two locking jaws 6 are positioned just underneath the cross-member 105 of said supporting stand 5 so as to contact against said cross-member 105, as shown clearly in figure 1. In the closed position of the two locking jaws 6, the two portions 9 of said connector are plugged in together, whereby the circuit of the two optical fibres 10 is closed. In this condition, the two locking jaws 6, engaged with the stem 2 through their nut-member 8, constitute a stop member co-operating with the cross-member 105 of the supporting stand 5 and, therefore, preventing any upward displacement of the stem 2, said displacement being necessary to open the valve. In order to unlock the stem 2 and permit its upward displacement and, therefore, permit the opening displacement of the valve 1, the two locking jaws 6 must be opened so as to disengage the halves of the nut-member 8 from the stem 2 and eliminate, therefore, the action of said stop member against the cross-member 105 of the supporting stand 5. However, upon opening the locking jaws said connector 9-9 is disconnected, or, stated otherwise, the opening may be only effected by disconnecting previously said connector, whereby the circuit of the optical fibres 10 will be interrupted. This interruption generates a signal which is suitably processed in a central station and may be used to communicate and/or to record the opening of the valve 1 and/or to activate a television apparatus permitting to see the person who is opening the valve.

Similarly, the detecting device according to the figures 1 to 3 may be used to detect the closure of the valve 1. In this instance, in the upward axially displaced position of the stem 2, corresponding to any desired opening position of the valve 1, the locking jaws 6 are closed against the stem 2 and are engaged in a non-slidable manner therewith in a lowermost position against the body of the valve 1, so as to act as a stop member preventing any downward displacement of the valve stem 2.

In the embodiment according to figures 1 to 3, the pair of jaws 6 may be completely disengaged from the supporting stand 5 when it is suitably opened. However, other embodiments are feasible wherein the two locking jaws 6 are connected permanently to the valve body 1, for example, by pivoting them at their hinge point 7 on a pivot which is secured, and specifically is welded or glued, to an upright member 205 of the supporting stand 5.

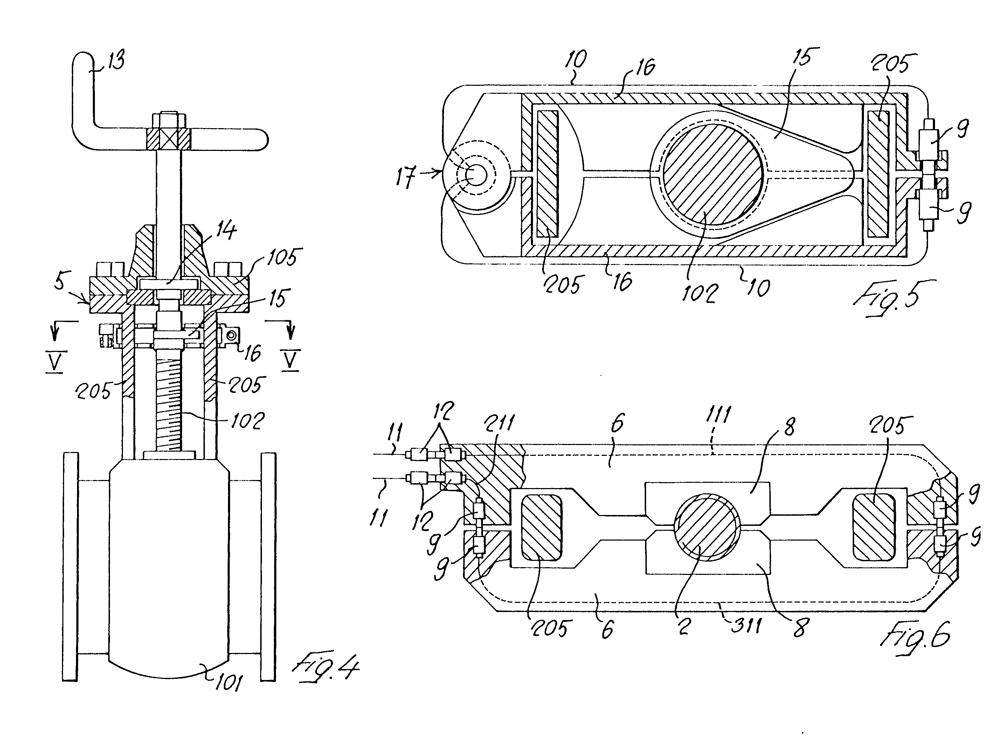

A modified embodiment of the detecting device for valves with an axially slidable stem is shown in figure 6 in a view similar to figure 5. In this instance, the two locking jaws 6 are not pivoted to each other, but they are separated from each other and are provided at each end thereof with a portion of connector 9 for optical fibres. The two portions of connector 9 of one of the jaws are connected - through optical fibres 111 and 211 incorporated within said jaw and, preferably, through two connectors 12 to a pair of outer optical fibres 11. The two portions of connector 9 of the other jaw 6 are connected to each other 20 through an optical fibre 311 also incorporated in the respective jaw 6. These two jaws 6 are closed against the upright members 205 of the supporting stand 5 and against the stem 2 and are engaged with the latter by means of their nut halves 8, with a rectilinear approaching movement that causes at the same time the plugging-in of the connectors 9-9 arranged at both ends thereof, whereby to close the circuit of the two optical fibres 11.

In the embodiments according to the figures 1 to 3 and 6, the two locking jaws 6 engage, in addition to the valve stem 2, the two upright members 205 of the supporting stand 5 in order to avoid the rotatioq of the pair of jaws 6 on the threaded valve stem 2 and, therefore, any undesired axial screwing displacement of the pair of jaws 6 on said stem 2. For this purpose, however, it may be sufficient for the two locking jaws 6 to engage, in addition to the valve stem 2, only one of the upright memebrs 205 of the supporting stand 5. More particularly, when the two locking jaws 6 are pivoted at a stationary fulcrum to one of the upright members 205 of the stand 5, the other upright member 205 may be left free from them.

Figure 4 shows a valve 101 actuated through a threaded valve stem 102 by means of a control handle 13, said stem being rotatably but not axially slidably mounted by virtue of a thrust-bearing flange 14, in the top cross-member 105 of an inverted U-shaped supporting stand 5 which is fixed to the valve body by means of its upright members 205. This type of valves is known as well, and the rotatable threaded stem 2 thereof moves the valve member by means of a nut-member which is solidary with said valve member, is threaded on the stem 2 and is axially slidably but not rotatably guided in the valve body 1.

The detecting device associated with this type of valves comprises a cam 15 which is non-rotatably fixed, e.g. by welding, to the stem 2. The device comprises also two jaws 16 which are pivoted to each other at 17 in a pliers-like manner, similarly to the jaws 6 of the figures 1 to 3. Again, the free ends of the two locking jaws 16 are each provided with a portion 9 of a connector for optical fibres. The two portions 9 of this connector are connected to respective optical fibres 10 which are passed outside of the locking jaws 16 to their hinge point 17 and are co-axially passed together through said hinge 17, e.g. as described with reference to figure 3 in connection with the jaws 6. The opposite inner sides of the locking jaws 16 have a configuration which is complementary with the cam 15, whereby said jaws 16 may clamp and lock therebetween said cam 15. Moreover, said locking jaws are of box-like shape, i.e. they comprise portions that may overlap the upper and/or lower side of said cam 15.

The detecting device described above may be applied to the valve 101 in any position of the valve member (a closed position or a completely or partially opened position) to detect the actuation of the valve and, therefore, every change in its condition. For this purpose, the two locking jaws 16 are clamped against the cam 15 of the stem 102 and against the upright members 205 of the supporting stand 5 so as to embrace said upright members 205 and lock the cam 15 therebetween, as shown in figure 2. At the same time, the two locking jaws 16 embrace the cam 15 also on the upper and lower sides thereof and enclose said cam in a box-like recess. In this closed position of the locking jaws 16, the two portions 9 of the connector are plugged in together so as to close the circuit between the two optical fibres 10. In these conditions, the locking jaws 16 prevent the rotation of the cam 15 and, therefore, of the valve stem 102. In order to actuate (i.e. to open or to close) the valve, the two locking jaws 16 must be opened to release the cam 15, which requires and causes the disconnection of the connector 9-9, thus interrupting the circuit of the optical fibres 10 and generating, therefore, a corresponding signal.

Of course, the locking jaws 16 may also be pivoted on a hinge member which is fixed, e.g. welded or glued, to an upright member 205 of the supporting stand 5, as described in connection with the locking jaws 6. In this instance, it would not be necessary for the locking jaws 16 to overlap the cam 15 axially. In addition, the locking jaws 16 may also be separate and may be closed against the cam 15 by means of a rectilinear mutual approaching movement, as described in connection with the locking jaws 6 with reference to figure 6. Both in the embodiment of the figures 1 to 3 and in the embodiment of the figures 4 and 5, the optical fibvres 10 -instead of being passed outside around the locking jaws 6,16 -may be incorporated within said jaws, as shown in figure 6.

The locking jaws 6 or 16 may be held in their closed position only by the connecting action of the two portions 9 of the connector for the optical fibre. However,said locking jaws 6,16 may also be locked to each other in their closed position by any suitable mechanical means, such as screws, latches, locks, padlocks and the like. Figure 9 shows, merely by way of non-limiting example, a mechanical connection device in the form of a screw 18 pivoted at 118 to one of the locking jaws 6 and engageable by an angular pivotal movement into a corresponding peripheral notch 19 in the other jaw. The two jaws 6 are then locked and tightened by means of a nut 20 which is $crewed on the free end of the pivoting screw 18.

The connector, or connectors, 9-9 provided between the two locking jaws 6,16 may be of any suitable construction. Connectors 9-9 may be used comprising, for example, a female portion and a male portion which are merely plugged in together and are kept in their plugged-in position by the friction therebetween, as seen diagrammatically in figure 9. Connectors may also be used which comprise male and female portions which may be plugged in together and are locked to each other mechanically. A first embodiment of a connector of this type is shown in figure 7, wherein a threaded locking ring 21 is rotatably mounted on a portion 9 of the connector and may be screwed on the corresponding threaded end 109 of the other portion of the connector. Figure 8 shows another embodiment wherein the two male and female portions 9 of the connector may be plugged in together as stated above and, additionally, they are kept together mechanically by a bayonet joint comprising, for example, a cap-like member 22 rotatably mounted on a portion 9 of the connector and having an L-shaped cutout 122 whereinto a pin 23 of the other portion 9 of the connector may be engaged.

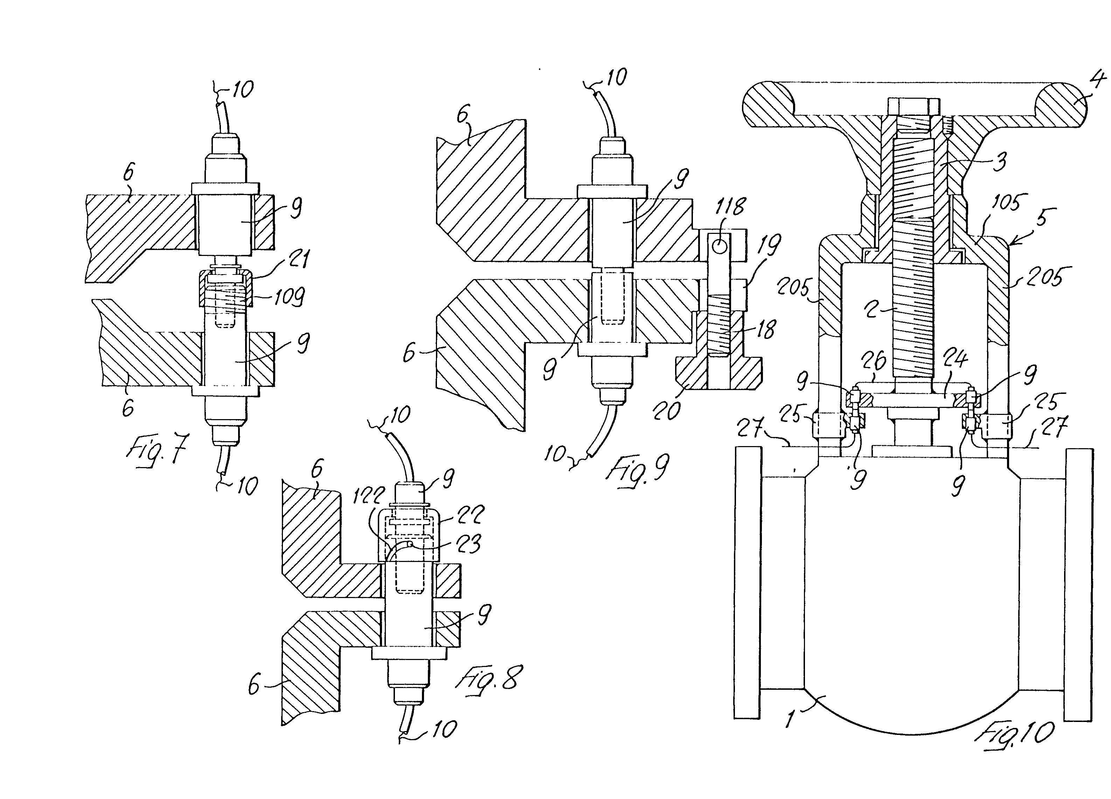

Figure 10 shows a further embodiment of the detecting device according to the invention, as applied to a valve 1 having a valve stem 2 which is only slidable axially, of the type described above with reference to figure 1. This detecting device is designed to detect the opening of the valve and comprises a connector-bearing member 24 which is fixed, e.g. welded, to the stem 2 and co-operates with at least one connector-bearing member 25 which is fixed, e.g. welded, to the supporting stand 5 or to the valve body 1. In the exemplary embodiment illustrated herein, the connector-bearing member 24 which is solidary with the stem 2 mounts the portions 9 of two connectors for optical fibres, each associated with a corresponding complementary portion of connector 9 mounted on a stationary connector-bearing member 25. The two portions of connector 9 which are mounted on the stationary connector-bearing members 25 are connected each to an optical fibre 27, while the two portions of connector 9 which are mounted on the movable connector-bearing member 24 are connected to each other by means of an optical fibre 26 which may be, if desired, incorporated within said connector-bearing member 24.

In the closed position of the valve 1, i.e. when the stem 2 is in its lowermost position, the connector portions mounted on the movable connector-bearing member 24 are plugged in the respective connector portions 9 which are mounted on the stationary connector-bearing members 25, or vice versa, whereby the circuit between the optical fibres 27 will be closed. Upon opening the valve, i.e. when the stem 2 begins moving upwards, the connectors 9-9 on the connector-bearing members 24 and 25 are disconnected, thus interrupting the circuit between the optical fibres 27. The possible working tolerances and wear clearances may be compensated for by a suitable axial springing of the connector portions 9 in the respective connector-bearing members 24 and 25.

In case of valves which are actuated by means of a rotatable and axially slidable stem, either type of detecting device according to the figures 1 to 3 and 4,5 may be used. In all cases, the locking jaws 6,16 and the connector-bearing members 24,25 may be made of any suitable material, particularly of metal or, at least partially, of plastics material. Moreover, though the connector or connectors 9-9 of the detecting devices according to the invention are preferably intended to be insertable in an optical circuit, i.e. to connect optical conductors to each other, the invention may be applied as well to detecting electrical circuits and then the connectors 9-9 will be designed for electrical conductors.

## Claims

1. A detecting device for valves and the like, characterized by at least one detecting connector (9-9) inserted in at least one conductor, preferably an optical conductor (10,11,27) and connected to the actuating means (2) for said valve so that it must be disconnected purposely to permit the actuation of the valve, or it is disconnected automatically upon the actuation of said valve, thus interrupting the respective conductor which may form a part of a warning and/or detecting circuit, said interruption constituting a signal that can be used, for example, to communicate and/or record the actuation of the valve and, if desired, to activate a television apparatus to see the person who is actuating the valve.

2. A device according to claim 1, intended particularly for valves with an actuating stem (2;102) and with a rotary member (3,4;13) actuating said stem - (2;102), both mounted on a supporting stand (5) in the shape of an inverted U which is solidary with the valve body (1;101), characterized by locking means (6;16) to be engaged with the actuating valve stem (2;102) and with a portion (205) of the supporting stand (5) and/or of the valve body so as to prevent said stem from moving, and to be disengaged from said valve stem (2;102) with previous disconnection of at least one detecting connector - (9-9).

3. A device according to claims 1 and 2, intended for valves with an axially slidable actuating stem - (2), characterized in that said locking means comprises two locking jaws (6) bearing two complementary portions (9) of at least one detecting connector (9-9) and clamped against the actuating stem (2) of the valve by plugging in said connector (9-9), thus engaging the valve stem (2) in an axially non-slidable manner and co-operating with a portion (105) which is solidary with said supporting stand (5) or valve body (1) so as to constitute a stop member against the movement of said stem - (2).

4. A device according to claim 3, characterized in that when the valve has a threaded actuating stem (2), at least one of the locking jaws (6) comprises a corresponding half (8) of a nut-member (8-8) adapted to engage with the threading of said stem (2).

5. A device according to claims 3 and 4, characterized in that said locking jaws (6) are also adapted to engage the valve body in a non-rotatable manner, specifically with at least one of the upright members (205) of said supporting stand (5).

6. A device according to claims 3 and 4, characterized in that said locking means comprises two locking jaws (16) bearing two complementary portions (9) of at least one detecting connector (9-9) and clamped -by plugging in said connector (9-9) - against a cam (15) which is fixed to said valve stem (102), said locking jaws (16) engaging also a portion which is solidary with the valve body (1), specifically with at least one of the upright members (205) of the supporting stand (5), so as to prevent the rotation of the cam (15) and, therefore, of the actuating stem (102) of the valve.

7. A device according to claim 6, characterized in that said locking jaws (16) also overlap at least one side of the cam (15) in the axial direction and specifically they are constructed so as to form together a box-like recess enclosing said cam (15).

8. A device according to one or more of the preceding claims, characterized in that the two locking jaws (6;16) are pivoted to each other in a pliers-like manner.

9. A device according to the claim 8, characterized in that the two locking jaws (6;16) are pivoted on a hinge member which is fixed, for example welded or glued, to one of the uprights of said supporting stand.

10. A device according to any one or more of the claims 1 to 7, characterized in that the two locking jaws (6) may be clamped against the actuating stem (2) of the valve or against the cam (15) which is fixed to said stem (102), with a rectilinear mutual approaching movement.

11. A device according to any one or more of the preceding claims, characterized in that the two locking jaws (6;16) may be latched to each other, in their closed position, by the frictional force due to the plugged-in condition of the two connector portions (9) and/or by mechanical connecting means of the two portions (9) of the connector.

12. A device according to any one or more of the preceding claims, characterized by suitable means to latch jaws (6;16) mechanically to each other in their closed position.

13. A device according to claim 1, characterized in that a portion (9) of at least one detecting connector (9-9) is fixed to the actuating stem (2) of the valve, while the corresponding complementary portion (9) of the connector is fixed to a stationary portion (25) of the valve body (1), whereby said connector (9-9) is plugged in only when said valve stem (2) is in a given axial or angular position.

14. A device according to claim 13, characterized in that at least one of the portions (9) of the connector (9-9) has a spring mounting in the direction of the movement of said stem (2) of the valve.

Fig. 1

Fig. 2

Fig. 3

Fig.4

Fig.5

Fig.6

0 203 498

Fig.7

Fig.8

Fig.9

Fig.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | GB-A-2 051 207 (W.H. MIDDLE) <br> * Page 2, lines 94-114 * <br><br> --- | 1 | F 16 K 35/06 <br> F 16 K 37/00 |
| A | GB-A- 895 957 (AMERICAN DISTRICT TELEGRAPH CO.) <br><br> --- | | |
| A | US-A-4 269 221 (H.R. ADAMS) <br><br> --- | | |
| A | GB-A-2 107 458 (HONDA GIKEN K.K.K.) <br><br> --- | | |
| A | US-A-3 714 644 (H.R. HELLSTROM) <br><br> ----- | | |

**TECHNICAL FIELDS SEARCHED (Int. Cl.4)**

F 16 K 35/00
F 16 K 37/00
E 05 B
G 08 B

The present search report has been drawn up for all claims

| Place of search | Date of completion of the search | Examiner |
|---|---|---|
| THE HAGUE | 25-08-1986 | 4117 |